**Europäisches Patentamt**

**European Patent Office**

**Office européen des brevets**

(19)

(11) Veröffentlichungsnummer: **0 097 801**
**B1**

(12) **EUROPÄISCHE PATENTSCHRIFT**

(45) Veröffentlichungstag der Patentschrift:
**29.01.86**

(51) Int. Cl.⁴: **A 01 D 80/02,** A 01 D 80/00

(21) Anmeldenummer: **83104626.3**

(22) Anmeldetag: **11.05.83**

(54) Anordnung zur Befestigung eines U-förmigen Doppelfederzinkens an den Tragarmen von Heuerntemaschinen.

(30) Priorität: **29.06.82 DE 3224193**

(43) Veröffentlichungstag der Anmeldung:
**11.01.84 Patentblatt 84/2**

(45) Bekanntmachung des Hinweises auf die Patenterteilung:
**29.01.86 Patentblatt 86/5**

(84) Benannte Vertragsstaaten:
**AT CH FR GB LI NL**

(56) Entgegenhaltungen:
**AT - B - 192 664**
**DE - A - 1 782 058**
**DE - A - 3 048 014**
**DE - U - 1 963 185**
**FR - A - 2 498 047**

(73) Patentinhaber: **Klöckner-Humboldt-Deutz AG
Zweigniederlassung Fahr, D-7702 Gottmadingen (DE)**

(72) Erfinder: **Wessel, Ulrich, Ing., Hilzingerstrasse 33,
D-7702 Gottmadingen (DE)**

(74) Vertreter: **Haft, Berngruber, Czybulka,
Hans-Sachs-Strasse 5, D-8000 München 5 (DE)**

ACTORUM AG

## Beschreibung

Die vorliegende Erfindung betrifft eine Anordnung zur Befestigung eines im allgemeinen U-förmigen Doppelfederzinkens an den Tragarmen von Heuerntemaschinen, dessen Mittelstück gleichfalls die Form eines U-förmigen Teils mit zwei gekrümmten Schenkeln besitzt, wobei das U-förmige Teil derart gekrümmt ist, dass die Schenkel des grekrümmten Teils in entsprechenden gekrümmten Vertiefungen des Tragarms eingreifen und mit diesem durch einen Befestigungsbolzen verspannbar sind, der zwischen den Schenkeln sowohl den Tragarm als auch ein gekrümmtes Klemmteil durchsetzt.

Die Zinken von Heuerntemaschinen werden im allgemeinen entweder reibschlüssig oder formschlüssig an den Zinkenträgern befestigt. Die reibschlüssige Verbindung hat den Nachteil, dass die Haltbarkeit sehr stark von der Oberflächenbeschaffenheit abhängig ist, wohingegen sie den Vorteil aufweist, dass die Herstellungstoleranzen, das Setzen der Federwindungen sowie bleibende Verformungen durch Nachstellen korrigiert werden können.

Die formschlüssige Zinkenbefestigung ermöglicht eine sichere Verbindung zwischen Zinken und Zinkenträgern, weist aber noch den Nachteil auf, dass der Winkel der Zinkenschenkel nicht optimal eingestellt werden kann, wodurch die Funktion des Gerätes leidet.

Aus dem DE-U Nr. 1963185 ist eine Vorrichtung zum Befestigen eines im wesentlichen U-förmig gebogenen Doppelfederzinkens an Tragarmen rechteckigen Querschnitts von Heuerntemaschinen bekannt, dessen den U-Bogen bildendes Ende in einer zur Ebene des U-Bogens rechtwinklig liegenden Ebene gekrümmt ist und wobei die Schenkel des gekrümmten Zinkenmittelstücks mit etwa der Hälfte ihres Querschnitts in der Krümmung des Zinkenmittelstücks entsprechenden Vertiefungen des Tragarms liegen und mit diesem durch eine Befestigungsschraube verspannbar sind, die zwischen den beiden Schenkeln angeordnet ist und sowohl den Tragarm als auch ein an der dem Tragarm gegenüberliegenden Seite des Zinkenmittelstücks anliegendes Druckstück durchsetzt.

Bei dieser Befestigung des Doppelfederzinkens am Tragarm kann die Stellung des Zinkens gegenüber dem Boden dadurch verändert werden, dass nach Lösen der Befestigungsschraube ein anderes Druckstück eingebaut wird, so das die Stellung des Doppelfederzinkens gegenüber dem Boden verändert wird.

Die Verwendung von Druckstücken bei dieser bekannten Befestigungsanordnung weist ferner noch den Nachteil auf, dass mit ihnen Fertigungstoleranzen nicht ausgeglichen werden können. Diese Fertigungstoleranzen ergeben sich bei der Herstellung der Doppelfederzinken einerseits und der Druckstücke andererseits, wobei sich in ungünstigen Fällen diese Herstellungstoleranzen addieren können, so dass mitunter erhebliche Lageabweichungen der Zinkenspitzen zum vorgegebenen Winkel zur Bodenoberfläche entstehen.

Ein weiterer Nachteil der bekannten Druckstücke ist darin zu sehen, dass die auf die Zinkenenden einwirkenden Kräfte so gerichtet sind, dass eine Verdrehung des U-förmigen Teils des Doppelfederzinkens eintritt, und zwar so, dass sich dieses U-förmige Teil von dem ihn untergreifenden Anschlag wegbewegt. Eine unbeabsichtigte Verdrehung des Doppelfederzinkens ist dann nicht mehr auszuschliessen, wenn besonders hohe Kräfte angreifen, oder wenn sich die Schraubverbindung an der Befestigungsstelle geringfügig gelöst hat.

Aufgabe der vorliegenden Erfindung ist es, eine Anordnung zur Befestigung eines im allgemeinen U-förmigen Doppelfederzinkens an den Tragarmen von Heuerntemaschinen zu schaffen, bei der die Haltbarkeit nicht von der Oberflächenbeschaffenheit der Bauteile abhängt, mit der der Winkel der Zinkenschenkel optimal eingestellt werden kann, bei der Fertigungstoleranzen keine Rolle mehr spielen und bei der ein unbeabsichtigtes Verdrehen des Zinkens zuverlässig verhindert wird, während eine leichte Korrektur von bleibenden Verformungen mit wenigen Handgriffen ermöglicht wird.

Ausgehend von einer Anordnung der eingangs näher genannten Art, erfolgt die Lösung dieser Aufgabe mit den im kennzeichnenden Teil des Anspruches 1 angegebenen Merkmalen. Vorteilhafte Ausgestaltungen sind in den Unteransprüchen beschrieben.

Durch die erfindungsgemässe Ausgestaltung des Anschlags werden die eingangs geschilderten Nachteile zuverlässig ausgeschaltet. Die bei der getrennten Herstellung von Doppelfederzinken und Tragarmen mit Klemmstücken auftretenden Fertigungstoleranzen können ohne weiteres ausgeglichen werden. Das bedeutet, dass die Zinken in ihrer korrekten optimalen Winkelstellung zur Bodenoberfläche befestigt werden können. Ferner wird der Vorteil erzielt, dass der Anschlag derartig am U-förmigen Teil des Doppelfederzinkens angreift, dass dieser bei einer durch äussere Kräfte hervorgerufenen, auf eine Verdrehung des Zinkens gerichtete Tendenz, immer den Anschlag berührt, so dass eine unbeabsichtigte Verdrehung ausgeschlossen ist.

Aufgrund der Verstellung des erfindungsgemässen Anschlags werden auch die Vorteile der beiden bisher bekannten Zinkenarretierungen, nämlich der formschlüssigen Zinkenbefestigung und der reibschlüssigen Zinkenbefestigung miteinander vereint. Ferner kann auf einfache Art und Weise durch Verstellen des formschlüssigen Anschlags die Stellung des Zinkens gegenüber dem Boden verändert werden.

Im folgenden wird die Erfindung anhand der Zeichnung näher erläutert, in der vorteilhafte Ausführungsbeispiele dargestellt sind. Es zeigen:

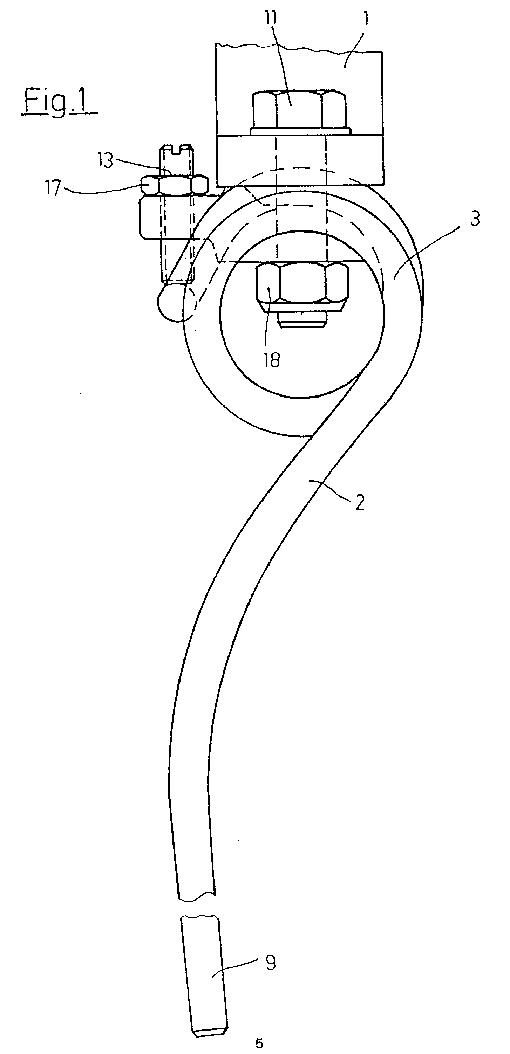

Fig. 1 eine Vorderansicht der Befestigungsanordnung für den Doppelfederzinken teilweise im Schnitt;

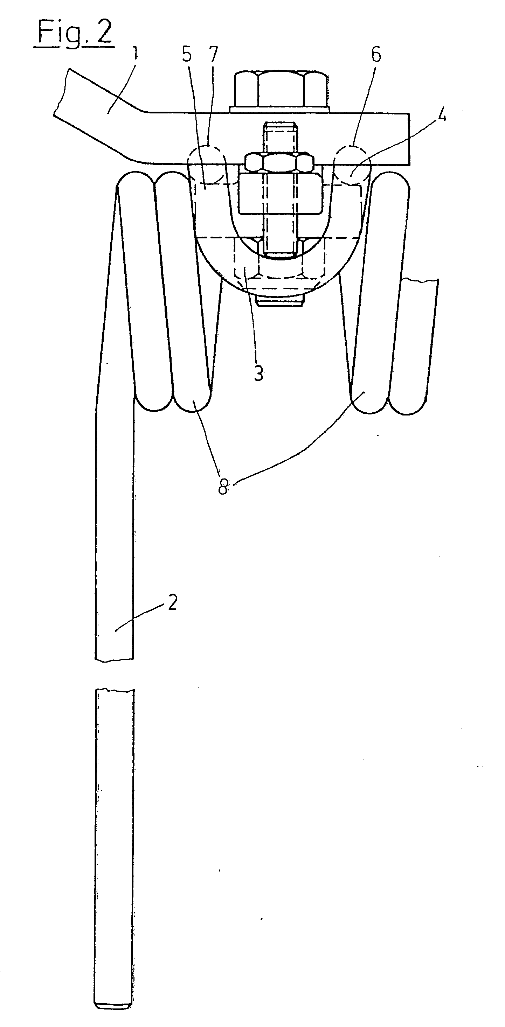

Fig. 2 eine um 90° verdrehte Ansicht des in Fig. 1 dargestellten Ausführungsbeispiels;

Fig. 3 ein anderes bevorzugtes Ausführungsbeispiel der Anordnung des verstellbaren Anschlags;

Fig. 4 ein anderes Ausführungsbeispiel der Anordnung des verstellbaren Anschlags und

Fig. 5 ein weiteres bevorzugtes Ausführungsbeispiel der Anordnung des verstellbaren Anschlags.

In den Figuren ist mit 1 ein Tragarm bezeichnet, beispielsweise aus Flachstahl, einer nicht näher dargestellten Heuerntemaschine, an dem ein U-förmig gebogener Doppelfederzinken 2 mit seinem U-förmig gekrümmten Teil 3 befestigt ist. Das Teil 3 ist in einer zur Ebene des U-förmigen Teils senkrecht liegenden Ebene gekrümmt. Die beiden Schenkel 4 und 5 des Teils 3 liegen etwa zur Hälfte ihres Querschnitts in Vertiefungen 6 und 7 des Tragarms 1, die an die Krümmung des Teils 3 angepasst sind. Anschliessend an das Teil 3 erstrecken sich die beiden zu je einer Wendel 8 gebogenen Schenkel 4 und 5, die an den Zinkenspitzen 9 enden.

Mit 10 ist ein Klemmteil bezeichnet, das der Form des gekrümmten Teils 3 angepasst ist und auf der dem Tragarm 1 gegenüberliegenden Seite des Teils 3 an den beiden Schenkeln 4 und 5 anliegt. Zwischen den beiden Schenkeln 4 und 5 durchsetzt ein Befestigungsbolzen 11 sowohl den Tragarm 1 als auch das Klemmteil 10, so dass durch Anziehen der Kontermutter das Teil 3 des Doppelfederzinkens 2 gegen den Tragarm 1 verspannt wird.

Um zu verhindern, dass der Doppelfederzinken 2 bei starker Belastung seine Lage selbsttätig ändert, ist neben dem Befestigungsbolzen 11 ein formschlüssiger verstellbarer Anschlag vorgesehen, an dem das U-förmige Teil 3 des Doppelfederzinkens 2 anliegt. Der Anschlag wirkt dabei von oben auf das U-förmige Teil 3 ein.

Für die Arbeitsleistung einer Heuerntemaschine ist die Stellung des Federzinkens bezüglich des Bodens, d.h. der Winkel, den die Zinkenspitzen 9 mit dem Boden einschliessen, von erheblicher Bedeutung. Um je nach Art des Ernteverfahrens und auch nach Art des Ernteguts diesen Winkel des Bodens verändern zu können, wird sowohl die Kontermutter 18 des Befestigungsbolzens 11 gelöst als auch die Feststellmutter 17 des Anschlags 13. Nach erneuter Ausrichtung der Federzinken 2 wird zuerst die Kontermutter 18 des Befestigungsbolzens 11 angezogen und danach durch Verdrehen des Gewindebolzens des Anschlags 13 dieser in Berührung mit dem Teil 3 des Federzinkens 2 gebracht. Durch Festziehen der Feststellmutter 17 wird der Doppelfederzinken 2 unverrückbar festgehalten.

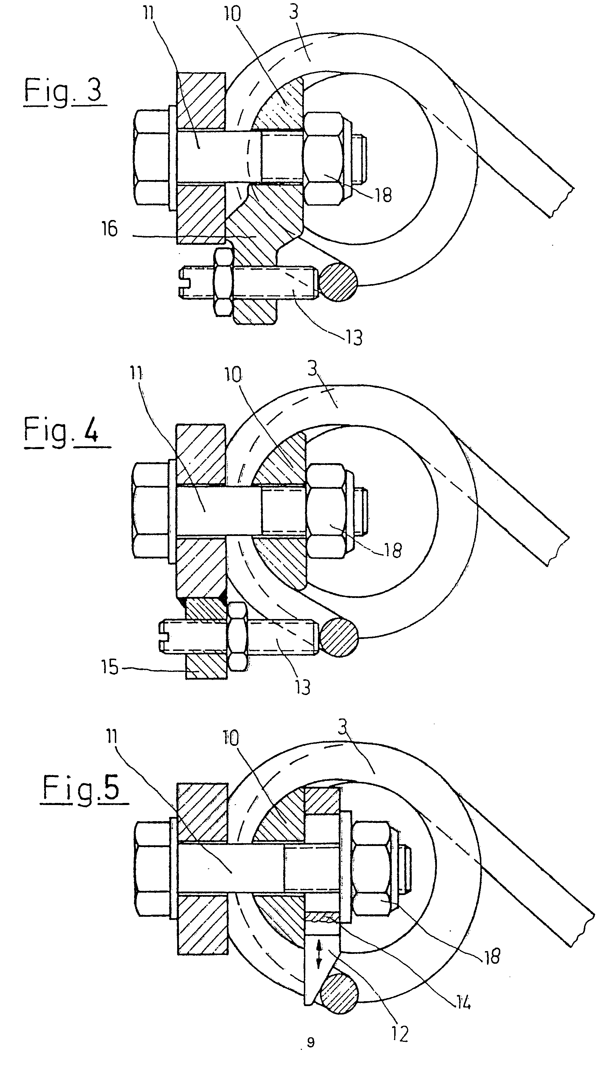

Bei dem in Fig. 3 dargestellten Ausführungsbeispiel durchsetzt der Anschlag 13 ein mit dem Tragarm 1 verbundenes Verlängerungsstück 15, das ebenfalls mit einem Innengewinde versehen ist.

Bei dem in Fig. 5 gezeigten Ausführungsbeispiel besteht der Anschlag 12 aus einem keilförmigen Gleitteil mit Langloch, das zwischen der ebenen Unterseite des Klemmteils 10 und der Kontermutter 18 des Befestigungsbolzens 11 angeordnet ist

und das von dem Befestigungsbolzen 11 durchsetzt wird.

Mit der erfindungsgemässen Anordnung zur Befestigung des Doppelfederzinkens ist es möglich, schnell und ohne Kostenaufwand die Zinkenstellung der landwirtschaftlichen Heuerntemaschine den verschiedenen Betriebsbedingungen anzupassen, wobei in allen Fällen der erfindungsgemässe Anschlag von oben auf das U-förmige Teil des Doppelfederzinkens einwirkt, so dass eine unbeabsichtigte Verdrehung des Doppelfederzinkens ausgeschlossen ist.

**Patentansprüche**

1. Anordnung zur Befestigung eines im Allgemeinen U-förmigen Doppelfederzinkens (2) an den Tragarmen (1) von Heuerntemaschinen, dessen Mittelstück gleichfalls die Form eines U-förmigen Teils (3) mit zwei gekrümmten Schenkeln (4, 5) besitzt, wobei das U-förmige Teil derart gekrümmt ist, das die Schenkel des gekrümmten Teils in entsprechend gekrümmte Vertiefungen (6, 7) des Tragarms eingreifen und mit diesem durch einen Befestigungsbolzen (11) verspannbar sind, der zwischen den Schenkeln sowohl den Tragarm als auch ein gekrümmtes Klemmteil (10) durchsetzt, dadurch gekennzeichnet, dass neben dem Befestigungsbolzen (11) ein formschlüssiger, verstellbarer, von oben auf das U-förmige Teil (3) des Doppelfederzinkens (2) einwirkender Anschlag (12, 13) vorgesehen ist, an dem das U-förmige Teil (3) anliegt.

2. Anordnung nach Anspruch 1, dadurch gekennzeichnet, dass der Anschlag (13) aus einer Gewindeschraube mit einer Feststellmutter (17) besteht.

3. Anordnung nach Anspruch 2, dadurch gekennzeichnet, dass der Anschlag (13) ein Verlängerungsstück (16) mit Innengewinde des Klemmteils (10) durchsetzt.

4. Anordnung nach Anspruch 2, dadurch gekennzeichnet, dass der Anschlag (13) ein Verlängerungsstück (15) mit Innengewinde des Tragarms (1) durchsetzt.

5. Anordnung nach Anspruch 1, dadurch gekennzeichnet, dass der Anschlag (12) aus einem keilförmigen Gleitteil mit Langloch besteht, das zwischen der ebenen Unterseite des Klemmteils (10) und der Kontermutter (18) des Befestigungsbolzens (11) angeordnet ist, und das von dem Befestigungsbolzen (11) durchsetzt wird.

**Revendications**

1. Dispositif pour la fixation d'une double dent élastique (2) en forme générale de U au bras support (1) d'une machine de fenaison, double dent dont la partie médiane (3) présente également la forme d'une pièce en forme de U, avec deux branches courbes (4, 5), la pièce en forme de U étant courbée de telle manière que les branches de la partie courbe s'engagent dans des cavités (6, 7) de courbure correspondante du bras support et peuvent y être bloquées par un boulon de fixation (11) qui traverse entre les branches aussi bien le bras support qu'une pièce de fixation courbe (10), caractérisé en ce que, en plus du boulon de fixation (11), il est prévu une butée (12, 13) positive réglable, agissant depuis le haut sur la partie (3) en forme de U de la double dent élastique (2), la partie (3) en forme de U étant appliquée contre cette butée.

2. Dispositif selon la revendication 1, caractérisé en ce que la butée (13) est constituée par une vis avec un écrou de réglage (17).

3. Dispositif selon la revendication 2, caractérisé en ce que la butée (13) traverse un prolongement (16) fileté intérieurement de la pièce de blocage (10).

4. Dispositif selon la revendication 2, caractérisé en ce que la butée (13) traverse un prolongement (15) fileté intérieurement du bras support (1).

5. Dispositif selon la revendication 1, caractérisé en ce que la butée (12) est constituée par une pièce de glissement en forme de coin avec un trou longitudinal, et qui est disposée entre la face inférieure plane de la pièce de blocage (10) et le contre-écrou (18) du boulon de fixation (11), qui traverse cette pièce en forme de coin.

## Claims

1. Arrangement for fastening a double spring tine (2) to a mounting bracket (1) of the kind provided on hay-harvesting machines, the said tine (2) being generally U-shaped, while its middle piece likewise possesses the form of a U-shaped portion (3) with two curved side limbs (4, 5), this U-shaped portion being curved in a manner such that its side limbs engage into correspondingly curved depressions (6, 7) in the mounting bracket, to which these side limbs (4, 5) can be clamped by means of a fastening bolt (11), passing between them and through both the mounting bracket and a curved clamping part (10), characterized in that an adjustable stop (12, 13) is provided beside the fastening bolt (11), this stop (12, 13) being positive by virtue of its shape and acting, from above, on the U-shaped portion (3) of the double spring tine (2), which portion (3) bears against it.

2. Arrangement according to Claim 1, characterized in that the stop (13) is composed of a screw, with a fixing nut (17).

3. Arrangement according to Claim 2, characterized in that the stop (13) passes through an extension piece (16) belonging to the clamping part (10), this extension piece (16) containing a tapped hole.

4. Arrangement according to Claim 2, characterized in that the stop (13) passes through an extension piece (15) belonging to the mounting bracket (1), this extension piece (15) containing a tapped hole.

5. Arrangement according to Claim 1, characterized in that the stop (12) is composed of a wedge-shaped sliding part containing an elongated hole which is positioned between the flat undersurface of the clamping part (10) and the lock nut (18) of the fastening bolt (11), and through which hole the fastening bolt (11) passes.

0 097 801

Fig.1

Fig.2

0 097 801

Fig. 3

Fig. 4

Fig. 5